# EUROPÄISCHE PATENTANMELDUNG

(11) **EP 1 371 936 A2**
(43) Veröffentlichungstag der Anmeldung: **17.12.2003**
(21) Anmeldenummer: 03013192.4
(22) Anmeldetag: 12.06.2003
(51) Int. Cl.: F42C 19/12, B60R 21/26

(54) **Zündvorrichtung für ein Sicherheitssystem**

(30) Priorität: 14.06.2002 DE 10226552
(71) Anmelder: Hirschmann Austria GmbH, 6830 Rankweil-Brederis (AT)
(72) Erfinder: Schmid, Günther, 6832 Röthis (AT)
(74) Vertreter: Thul, Hermann, Dipl.-Phys.

(57) **Zusammenfassung**

Die Erfindung betrifft eine Zündvorrichtung für ein Sicherheitssystem, insbesondere einen Airbag oder einen Gurtstraffer eines Fahrzeuges, wobei im Bereich eines Treibmittels (5), insbesondere des Zündelementes (2) bzw. der Treibladung, eine zusätzliche Komponente (3) mit einer niedrigen Selbstentzündungstemperatur vorgesehen ist, um ein sicheres Anzünden des Treibmittels bzw. ein sicheres Überzünden auf die gesamte pyrotechnische Masse bei äußerer thermischer Belastung des gesamten Systems in einer kurzen Zeit zu gewährleisten.

## Beschreibung

Die Erfindung betrifft eine Zündvorrichtung für ein Sicherheitssystem, insbesondere einen Airbag oder einen Gurtstraffer eines Fahrzeuges, gemäß den Merkmalen des Oberbegriffes des Patentanspruches 1.

Aus der AT 000 522 U1 ist schon eine Antriebsvorrichtung für Rückhaltesysteme in Kraftfahrzeugen bekannt. Diese besteht aus einem Gehäuse mit einem Zylinder, in dem ein Kolben bewegbar angeordnet ist. Der Kolben wird aus dem Zylinder herausgedrückt, wenn eine Arbeitskammer des Gehäuses druckbeaufschlagt durch Zünden einer Treibladung gefüllt worden ist. Die Treibladung ist in einem Teilbereich des Gehäuses angeordnet und wird durch einen sogenannten Berstboden von der Arbeitskammer getrennt. Aktiviert wird die Treibladung durch ein Zündelement, die, wenn das Zündelement gezündet wurde, auch die Treibladung zur Explosion bringt. Bisher wird hierfür beispielsweise eine Nitrocellulose eingesetzt, die Zündtemperaturen von etwa 180°C bis 250°C aufweist. die Solche Zündvorrichtungen bzw. pyrotechnische Zünder werden in großer Anzahl in sicherheitsrelevanten Gasgeneratoren verbaut, um so beispielsweise in der Kfz-Industrie die Funktion von Sicherheitssystemen wie Airbags oder Gurtstraffern sicherzustellen. Seit einiger Zeit wird das Ziel verfolgt, schadstoffarme bzw. bleifreie Zündelemente bzw. Treibladungen für solche Zündvorrichtungen zu entwickeln. Dabei sind auch bereits vorhandene bzw. zukünftig kommende gesetzliche Regelungen zu berücksichtigen. Hierbei wurde schon der Ansatz gemacht, Treibladungen bzw. Zündelemente auf schadstoffarmer Basis aufzubauen. Aufgrund der chemischen Zusammensetzung zur Erzielung der schadstoffarmen Basis weisen die Treibladungen bzw. Zündelemente jedoch eine höhere Selbstentzündungstemperatur auf als derzeit in Verwendung befindliche Treibladungen bzw. Zündelemente. Aufgrund dessen treten im eingebauten Zustand der Zündvorrichtungen immer wieder Probleme mit dem sogenannten BON-FIRE-Test (siehe beispielsweise ISO/DIS 12097-3, Test 7.4) auf. Dieser BON-FIRE-Test wird in Deutschland von der Bundesanstalt für Materialprüfung (BAM) vorgeschrieben. Hierbei wird das Sicherheitssystem an seiner ungünstigen Stelle solange mit einer Flamme beauflagt, bis das Anzündelement bzw. die Treibladung zündet. Dabei dürfen sich jedoch keine wegfliegenden Teile von dem Sicherheitssystem lösen und zum Beispiel aus einem Gehäuse des Sicherheitssystems austreten. Diese Tatsache bewirkt jedoch aufgrund der höheren Selbstentzündungstemperatur von schadstoffarmen Treibladungen bzw. Zündelementen eine wesentlich längere Einwirkzeit in der Beflammung und somit eine deutlich verstärkte mechanische Schwächung des Sicherheitssystems. Dies führt in weiterer Folge zu keinem positiven BON-FIRE-Testergebnis, wodurch entweder keine Transportgenehmigung oder nur eine eingeschränkte Transportgenehmigung mit hohen Auflagen von der zuständigen Behörde erteilt werden kann, wodurch ein wirtschaftliches Befördern der vorgefertigten Sicherheitssysteme verhindert wird.

Der Erfindung liegt daher die Aufgabe zugrunde, ein Sicherheitssystem mit schadstoffarmen Treibmitteln so zu verbessern, daß die äußere thermische Einwirkzeit bis zum Auslösen des Sicherheitssystems, insbesondere beim BON-FIRE-Test soweit reduziert wird, daß die die Treibmittel umgebenden Komponenten noch so mechanisch vorhanden sind, daß keine wegfliegenden Teile sich lösen können.

Diese Aufgabe ist durch die Merkmale des Patentanspruches 1 gelöst.

Erfindungsgemäß ist vorgesehen, daß im Bereich eines Treibmittels, insbesondere des Zündelementes und/oder der Treibladung, eine Komponente mit einer niedrigen Selbstentzündungstemperatur vorgesehen ist. Diese zusätzliche pyrotechnische Komponente wird so im Bereich eines Treibmittels plaziert, daß ein sicheres Anzünden bzw. Überzünden auf die gesamten pyrotechnischen Treibmittel in einer kurzen Zeit, insbesondere unter äußerer thermischer Belastung in möglichst kurzer Zeit erfolgt. Dadurch werden, insbesondere beim BON-FIRE-Test, vom Sicherheitssystem wegfliegende oder aus dem Gehäuse austretende Teile vermieden, so daß insgesamt die Sicherheit des Sicherheitssystems, auch beim Transport und nicht nur im eingebauten Zustand, erhöht wird. Denn aufgrund der niedrigen Selbstentzündungstemperatur kommt es zu einem frühzeitigen Anzünden bzw. Überzünden des Treibmittels, ohne daß vorher die mechanischen Komponenten des Sicherheitssystems wesentlich geschwächt werden. In Bezug auf den gesetzlich vorgeschriebenen BON-FIRE-Test wird damit eine rechtzeitige Zündung des Systems bei äußerer thermischer Belastung des gesamten Systems erzielt. D.h. daß die Treibladung zündet, bevor das Gehäuse des Systems durch die äußere thermische Belastung beschädigt wird. Damit wird verhindert, daß das Treibmittel aus dem Gehäuse austreten kann, was mit negativen Folgen wie Verletzungen von Personen verbunden wäre.

In Weiterbildung der Erfindung sind die Treibmittel Zündelement und/oder Treibladung mit einer Schutzkappe (bei dem Zündelement) bzw. einem Gehäuse (bei der Treibladung) umgeben. Innerhalb der Schutzkappe bzw. des Gehäuses befinden sich die Treibmittel, in die die Komponente mit der niedrigen Selbstentzündungstemperatur als Granulat und/oder in flüssiger Form eingebracht sind. Ebenso kann daran gedacht werden, daß die Treibmittel des Zündelementes bzw. der Treibladung aus einzelnen Tabletten bestehen, zwischen denen die zusätzliche Komponente als Granulat oder in flüssiger Form eingebracht ist.

In Weiterbildung der Erfindung ist die Komponente in einer vorgebbaren Position innerhalb der Schutzkappe und/oder des Gehäuses angeordnet. Dies läßt sich beispielsweise dann erzielen, wenn die Treibmittel in Tablettenform vorhanden sind und in die Zwischenräume zwischen den Tabletten bzw. in Richtung der Schutzkappe bzw. des Gehäuses mit der Komponente ausgefüllt werden. Ergänzend oder alternativ dazu kann daran gedacht werden, die Tabletten mit der zusätzlichen Komponente zu überziehen. Ebenso ist es zur Erzielung einer vorgebbaren Position für die zusätzliche Komponente denkbar, den Innenbereich der Schutzkappe bzw. des Gehäuses mit der Komponente zu beschichten.

In Weiterbildung der Erfindung ist vorgesehen, daß die Treibladung und/oder das Zündelement zumindest teilweise die Komponente mit der niedrigen Selbstentzündungstemperatur aufweist. Durch die Beimengung der zusätzlichen Komponente, beispielsweise in Pulverform oder als Granulat, zu der Treibladung bzw. zu der Ladung des Zündelementes wird sichergestellt, daß ein sicheres und schnelles Anzünden bzw. Überzünden auf die gesamte pyrotechnische Masse in einer relativ kurzen Zeit erfolgt. Dabei stehen mehrere Möglichkeiten zur Verfügung, um die zusätzliche Komponente dem jeweiligen Treibmittel beizumengen.

In Weiterbildung der Erfindung ist die zusätzliche Komponente an einem Sockel angeordnet, wobei der Sockel das Zündelement trägt. Damit ist die zusätzliche Komponente ebenfalls im Bereich eines Treibmittels, nämlich im Bereich des Zündelementes, angeordnet und trägt ebenso zu einem sicheren und schnellstmöglichen Anzünden der gesamten pyrotechnischen Masse bei äußerer thermischer Belastung bei.

In Weiterbildung der Erfindung weist die Zündvorrichtung eine Boosterladung auf, die wiederum zumindest teilweise die Komponente mit einer niedrigen Selbstentzündungstemperatur aufweist. Zur Verstärkung der Effektivität des Sicherheitssystems kann eine solche Boosterladung erforderlich sein, die dann ebenfalls die zusätzliche Komponente aufweist, um das sichere Anzünden bzw. Überzünden in der notwendigen Zeit auf die gesamte pyrotechnische Masse zuverlässig sicherzustellen. Eine solche Boosterladung kann, muß aber nicht vorhanden sein.

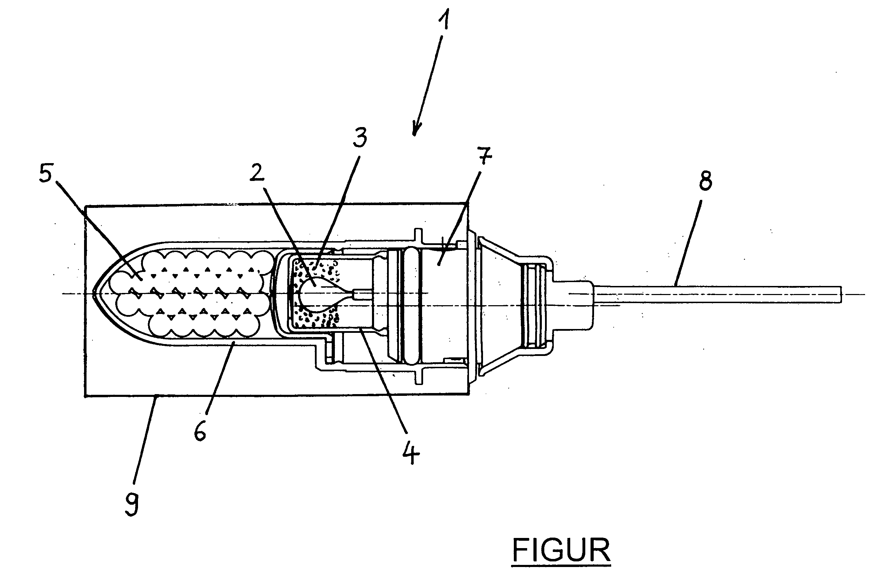

Ein beispielhafter Aufbau einer Zündvorrichtung für ein Sicherheitssystem (hier ein Gurtstraffer), auf das die vorliegende Erfindung jedoch nicht beschränkt ist, ist im folgenden erläutert und anhand der Figur beschrieben.

Die Figur zeigt eine Zündvorrichtung 1, die in diesem beispielhaften Aufbau vorfertigbar ist und in das Sicherheitssystem wie Airbag oder Gurtstraffer eingesetzt werden kann.

Die Zündvorrichtung 1 weist zunächst ein Zündelement 2 mit Treibmitteln auf, wobei das Zündelement 2 in Abhängigkeit von sicherheitsrelevanten Kriterien (wie z.B. Auffahrunfall, der zur Auslösung eines Airbags führen soll) gezündet wird. Von dem gezündeten Zündelement 2 wird dann eine das Zündelement 2 umgebende Boosterladung 3 zur Verstärkung des pyrotechnischen Effektes gezündet. Diese Boosterladung 3 kann, muß aber nicht vorhanden sein. Das Zündelement 2 (und gegebenenfalls die Boosterladung 3) sind von einer Schutzkappe 4 umgeben. Nach dem Anzünden des Zündelementes 2 erfolgt ein Überzünden auf die davorliegende Treibladung 5, die ebenfalls entsprechende Treibmittel aufweist. Auch die Treibladung 5 ist durch ein Gehäuse 6, insbesondere einen sogenannten Treibladungsbecher, umgeben. Die gesamte bisher beschriebene Einheit mit Zündelement 2 sowie Treibladung 5 sitzt auf einem Sockel 7, auf dem das Zündelement 2 mit seiner Schutzkappe 4 sowie die Treibladung 5 mit seinem Gehäuse 6 angeordnet ist. Aus dem Sockel 7 heraus führt die elektrische Zuleitung 8, über welche das Zündelement 2 gezündet wird.

Erfindungsgemäß ist nun vorgesehen, daß im Bereich eines Treibmittels (wie beispielsweise im Bereich des Zündelementes 2, der Boosterladung 3 bzw. der Treibladung 5) eine Komponente mit einer niedrigen Selbstentzündungstemperatur vorgesehen ist. Dies kann dadurch erfolgen, daß die zusätzliche Komponente innerhalb der Schutzkappe 4, innerhalb des Gehäuses 6 oder auf dem Sockel 7 angebracht, beispielsweise beigemengt, ist. Ebenso bietet es sich an, das Zündelement 2, die Innenseite der Schutzkappe 4, die Innenseite des Gehäuses 6 oder den Sockel 7 mit der Komponente zu beschichten. Bestehen die Treibmittel des Zündelementes 2, der Boosterladung 3 bzw. der Treibladung 5 aus einzelnen Teilen wie z.B. Tabletten, können diese mit der Komponente versehen, insbesondere beschichtet werden. Ebenso ist es denkbar, nach dem Einbringen des Zündelementes 2 (und gegebenenfalls der Boosterladung 3) in die Schutzkappe 4 bzw. nach dem Einbringen der Treibladung 5 in das Gehäuse 6 die Schutzkappe 4 bzw. das Gehäuse 6 mit der flüssigen Komponente zu füllen, oder die zusätzliche Komponente in Tablettenform beizulegen. Die in der Figur gezeigte Zündvorrichtung 1 wird noch entweder vom Hersteller derselben oder bei einem Endkunden (zum Beispiel Automobilhersteller) in ein Gehäuse 9 montiert, das nur schematisch dargestellt ist. Dieses Gehäuse 9 ist Teil oder Ganzes der Sicherheitsvorrichtung, wie zum Beispiel einem Airbag oder einem Gurtstraffer in einem Automobil.

Insgesamt ist auf jeden Fall durch die zusätzliche Komponente mit der niedrigen Selbstentzündungstemperatur sichergestellt, daß ein sicheres Anzünden der gesamten pyrotechnischen Masse bzw. ein sicheres Überzünden auf die gesamte pyrotechnische Masse des Sicherheitssystems in kurzer Zeit zuverlässig erfolgt, und somit bei äußerer thermischer Belastung die Anforderungen in Bezug auf den BON-FIRE-Test erfüllt werden können. Dadurch wird vermieden, daß explosionsartig und damit personengefährdend Teile aus dem Gehäuse 6 beziehungsweise aus dem Gehäuse 9 bei äußerer thermischer Belastung austreten können.

## Patentansprüche

1. Zündvorrichtung (1) für ein Sicherheitssystem, insbesondere einen Airbag oder einen Gurtstraffer eines Fahrzeuges, mit einem insbesondere von einer Schutzkappe (4) umgebenen Zündelement (2), durch welches eine insbesondere von einem Gehäuse (6) umgebene Treibladung (5) aktivierbar ist, **dadurch gekennzeichnet, daß** im Bereich eines Treibmittels, insbesondere des Zündelementes (2) oder der Treibladung (5) eine zusätzliche Komponente mit einer niedrigen Selbstentzündungstemperatur vorgesehen ist.

2. Zündvorrichtung (1) nach Anspruch 1, **dadurch gekennzeichnet, daß** die zusätzliche Komponente als ein Granulat in die Schutzkappe (4) und/oder das Gehäuse (6) einbringbar ist.

3. Zündvorrichtung (1) nach Anspruch 1, **dadurch gekennzeichnet, daß** die zusätzliche Komponente in flüssiger Form in die Schutzkappe (4) und/oder in das Gehäuse (6) einbringbar ist.

4. Zündvorrichtung (1) nach Anspruch 1, **dadurch gekennzeichnet, daß** die zusätzliche Komponente in Tablettenform in die Schutzkappe (4) und/oder in das Gehäuse (6) einbringbar ist.

5. Zündvorrichtung (1) nach einem der vorhergehenden Ansprüche, **dadurch gekennzeichnet, daß** die zusätzliche Komponente in einer vorgebbaren Position innerhalb der Schutzkappe (4) und/oder des Gehäuses (6) angeordnet ist.

6. Zündvorrichtung (1) nach einem der vorhergehenden Ansprüche, **dadurch gekennzeichnet, daß** die Treibladung (5) zumindest teilweise die Komponente mit der niedrigen Selbstentzündungstemperatur aufweist.

7. Zündvorrichtung (1) nach einem der vorhergehenden Ansprüche, **dadurch gekennzeichnet, daß** das Zündelement (2) zumindest teilweise die Komponente mit der niedrigen Selbstentzündungstemperatur aufweist.

8. Zündvorrichtung (1) nach einem der vorhergehenden Ansprüche, **dadurch gekennzeichnet, daß** die zusätzliche Komponente an einem Sockel (7) angeordnet ist, wobei der Sockel (7) das Zündelement (2) trägt.

9. Zündvorrichtung (1) nach einem der vorhergehenden Ansprüche, **dadurch gekennzeichnet, daß** die Zündvorrichtung (1) eine Boosterladung (3) aufweist, die wiederum zumindest teilweise die Komponente mit der niedrigen Selbstentzündungstemperatur aufweist.
